# EUROPÄISCHE PATENTSCHRIFT

(11) **EP 2 992 183 B1**
(45) Veröffentlichungstag und Bekanntmachung des Hinweises auf die Patenterteilung: **19.04.2017**
(21) Anmeldenummer: 14737190.0
(22) Anmeldetag: 03.07.2014
(51) Int. Cl.: F16K 1/44, F01D 17/10, F16K 31/363, F01D 17/14

(54) **VENTIL FÜR EINE STRÖMUNGSMASCHINE**
VALVE FOR A TURBOMACHINE
VANNE POUR UNE TURBOMACHINE

(30) Priorität: 25.07.2013 EP 13177934
(43) Veröffentlichungstag der Anmeldung: 09.03.2016
(73) Patentinhaber: Siemens Aktiengesellschaft, 80333 München (DE)
(72) Erfinder: KAHL, Jan, 53804 Much (DE); KALIWODA, Andreas, 42719 Sollingen (DE); LEKIC, Nikolaj, 45475 Mülheim (DE); MYSCHI, Oliver, 47137 Duisburg (DE); NIEDEREHE, Maximilian, 47259 Duisburg (DE)
(86) Internationale Anmeldenummer: PCT/EP2014/064160
(87) Internationale Veröffentlichungsnummer: WO 2015/010869

(56) Entgegenhaltungen:
- EP-A1- 0 054 602
- EP-A2- 0 828 102
- DE-B- 1 200 324

## Beschreibung

Die Erfindung betrifft ein Ventil für eine Strömungsmaschine, insbesondere Dampfturbine, mit einem Ventilkegel und einem Ventilsitz, wobei der Ventilkegel in einem Ventilkörper bewegbar gegenüber dem Ventilsitz ausgebildet ist.

Ventilen für Strömungsmaschinen, insbesondere Dampfturbinen, kommt eine besondere Bedeutung zu, da die Dampfzufuhr zu einer Dampfturbine im Wesentlichen zwei Eigenschaften aufweisen muss. Dies wäre zum einen das Regeln des in die Dampfturbine strömenden Dampfes und im Falle einer Störung der Schnellschluss des Ventils, um die Dampfzufuhr zu unterbrechen. Es gibt Ausführungsformen von Ventilen, in der diese zwei Eigenschaften in einem einzigen Ventilgehäuse angeordnet werden. Aufgrund der hohen Temperaturen und der hohen Drücke des Dampfes sind die technischen Herausforderungen an solche Ventile besonders hoch. Das Öffnen und Schließen bei hohen Temperaturen und hohen Drücken gestaltet sich als schwierig. In der Regel müssen in Ventilen ein Ventilkegel in einer Richtung bewegbar ausgebildet werden. Die Kräfte um diesen Ventilkegel bewegen zu können sind vergleichsweise hoch und werden entweder hydraulisch oder elektrohydraulisch ausgebildet. Des Weiteren müssen die Ventile aus Sicherheitsgründen derart ausgeführt sein, dass ein Fehler oder ein Ausfall der Ansteuerung zu einem automatischen Schließen der Ventile führt (Sicherheitsstellung "Ventil zu"). EP0054602 offenbart ein Ventil für eine Strömungsmaschine nach dem Oberbegriff vom Anspruch 1. Es ist Aufgabe der Erfindung, eine alternative Möglichkeit anzugeben, einen Ventilkegel gegen den Ventilsitz zu bewegen. Gelöst wird diese Aufgabe durch ein Ventil für eine Strömungsmaschine, insbesondere Dampfturbine, mit einem Ventilkegel und einem Ventilsitz, wobei der Ventilkegel in einem Ventilkörper bewegbar gegenüber dem Ventilsitz ausgebildet ist, wobei der Ventilkörper einen ersten Druckraum aufweist, der derart ausgebildet ist, dass bei einer Beaufschlagung im ersten Druckraum mit dem Druck p₁ sich der Ventilkegel in Richtung Ventilsitz bewegt, wobei der Ventilkörper einen zweiten Druckraum aufweist, der derart ausgebildet ist, dass bei einer Beaufschlagung im zweiten Druckraum mit dem Druck p₁ sich der Ventilkegel in die entgegengesetzte Richtung des Ventilsitzes bewegt.

Der erste Druckraum wird in Bewegungsrichtung des Ventilkegels gesehen, derart ausgebildet, dass dieser eine projizierte effektive erste Druckfläche A₁ aufweist, wobei der zweite Druckraum in Bewegungsrichtung des Ventilkegels gesehen, eine projizierte effektive zweite Druckfläche A₂ aufweist, wobei gilt: A₁ < A₂.

Dadurch ist die über den Druck aufgebaute Kraft auf den beiden Druckflächen unterschiedlich groß, so dass schließlich eine Bewegung des Ventilkegels möglich ist.

Erfindungsgemäß wird somit durch die Verwendung prozessinterner Medien unter Berücksichtigung verschiedener Geometrien der Arbeitsräume und dem Einsatz thermodynamisch differenter Zustandsgrößen das Öffnen und Schließen des Ventils ermöglicht. Hierbei wird insbesondere der erste Druckraum mit einem Druck p₁ beaufschlagt, wobei der Druck p₁ durch das einströmende Strömungsmedium, hier Dampf, ausgebildet ist.

Vorteilhafte Weiterbildungen sind in den Unteransprüchen angegeben.

So weist das Ventil zum Zuführen von Prozessmedium einen Einströmraum auf, wobei im Ventilkegel oder im Ventilkörper eine Zuleitung ausgebildet ist, die den Einströmraum mit dem ersten Druckraum strömungstechnisch verbindet.

Es wird somit vorgeschlagen, im Ventilkegel oder im Ventilkörper eine zusätzliche Leitung, nämlich die Zuleitung auszubilden, die eine kommunizierende Verbindung zwischen dem Einströmraum und dem Druckraum ermöglicht.

Somit verbreitet sich der Druck p₁ im ersten Druckraum und führt schließlich zu einer Kraft in Richtung Ventilsitz.

In vorteilhafter Weise ist eine Einrichtung vorgesehen, zum Zuführen von Dampf in den zweiten Druckraum, wobei die Einrichtung derart ausgebildet ist, dass bei der Bewegung des Ventilkegels in Richtung Ventilsitz der zweite Druckraum mit dem Druck p₀ beaufschlagt ist, wobei gilt: p₀ < p₁.

Ebenso wird in vorteilhafter Weise die Einrichtung derart ausgebildet, dass bei der Bewegung des Ventilkegels in entgegengesetzter Richtung zum Ventilsitz der zweite Druckraum mit dem Druck p₁ beaufschlagt ist. Somit kann die Einrichtung zumindest ein Ventil umfassen, das entweder eine strömungstechnische Verbindung zum Prozessmedium mit dem Druck p₁ oder p₀ herstellt.

In einer weiteren vorteilhaften Weiterbildung weist der Ventilkörper einen dritten Druckraum auf, der derart ausgebildet ist, dass bei einer Beaufschlagung im dritten Druckraum mit dem Druck p₀ eine Druckkraft auf den Ventilkegel in Richtung Ventilsitz erfolgt. Vorteilhafterweise ist der Ventilkegel rohrförmig ausgebildet, wobei endseitig der Ventilkegel eine Stufe aufweist, wobei eine obere Stufe den dritten Druckraum und eine untere Stufe dem ersten Druckraum zugeordnet ist.

Vorteilhafterweise ist innerhalb des Ventilkegels ein weiterer Ventilkegel angeordnet, der zum Regeln und zum Schnellschluss einer Dampfströmung ausgebildet ist.

Erfindungsgemäß ist der Ventilkegel zum Schnellschluss ausgebildet.

Die Erfindung wird nun anhand eines Ausführungsbeispiels näher erläutert. Darin zeigen in schematischer Weise:
- Figur 1: Ventil im geschlossenen Zustand,
- Figur 2: Ventil im geöffneten Zustand.

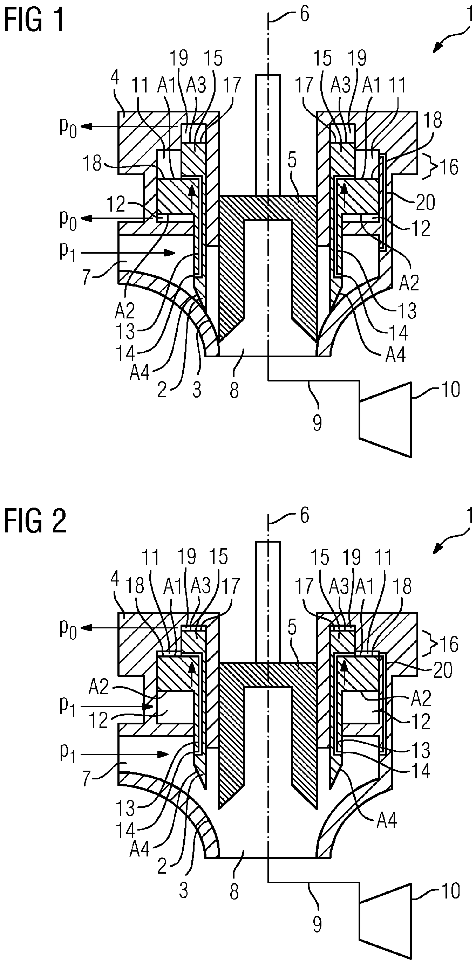

Die Figur 1 zeigt ein Ventil 1 umfassend einen Ventilkegel 2, einen Ventilsitz 3 und einen Ventilköper 4. Innerhalb des Ventilkörpers 4 ist ein weiterer optionaler Stellventilkegel 5 angeordnet. Der Ventilkegel 2 ist im Wesentlichen rotationssymmetrisch um eine Rotationssymmetrieachse 6 ausgebildet. Der Ventilkörper 4 kann hierbei in Richtung der Rotationsachsymmetrieachse 6 in Richtung Ventilsitz 3 bewegt werden als auch entgegen den Ventilsitz 3 bewegbar ausgebildet sein.

Der Ventilkörper 4 und der Ventilsitz 3 sind als ein integrales Bauteil ausgebildet. Im Ventil 1 ist ein Einströmraum 7 angeordnet, in den ein Prozessmedium, beispielsweise Dampf strömen kann. Des Weiteren umfasst das Ventil 1 einen Ausströmraum 8. Über eine strömungstechnische Verbindung 9 wird der Dampf schließlich einer Dampfturbine 10 zugeführt. Das Ventil 1 ist für eine Strömungsmaschine, insbesondere eine Dampfturbine 10 ausgebildet.

Der Ventilkörper 4 weist einen ersten Druckraum 11 auf. Der erste Druckraum 11 ist hierbei derart ausgebildet, dass bei einer Beaufschlagung im ersten Druckraum 11 mit dem Druck p₁ sich der Ventilkegel 2 in Richtung Ventilsitz 3 bewegt.

Der Ventilkörper 4 weist einen zweiten Druckraum 12 auf, der derart ausgebildet ist, dass bei einer Beaufschlagung im zweiten Druckraum 12 mit dem Druck p₁ sich der Ventilkegel 2 in die entgegengesetzte Richtung vom Ventilsitz 3 weg bewegt.

In Zeichenrichtung der Figur 1 würde sich in diesem Fall der Ventilkegel 2 nach oben bewegen.

Im Einströmraum 7 befindet sich in der Regel ein Prozessmedium, insbesondere Dampf mit dem Druck p₁.

Der Ventilkegel 2 oder der Ventilkörper 4 weist eine Zuleitung 13 bzw. 20 auf, die den Einströmraum 7 mit dem ersten Druckraum 11 strömungstechnisch verbindet. Dazu befindet sich im Ventilkegel 2 eine strömungstechnische Verbindung, die beispielsweise als Ringkanal ausgeführt sein kann und sich rotationssymmetrisch über die Symmetrieachse 6 erstreckt. Die Zuleitung 13 weist hierbei eine Öffnung 14 auf, die außenseitig in Richtung des Einströmraums 7 weist.

Das Ventil 1 weist eine nicht näher dargestellte Einrichtung zum Zuführen von Dampf mit dem Druck p₀ oder p₁ in den zweiten Druckraum 12 sowie eine nicht näher dargestellte Einrichtung zum Zuführen von Dampf mit dem Druck p₀ in einen dritten Druckraum 19 auf, wobei die Einrichtung derart ausgebildet ist, dass bei der Bewegung des Ventilkegels 2 in Richtung Ventilsitz 3 der zweite Druckraum 12 mit dem Druck p₀ beaufschlagt ist, wobei gilt: p₀ < p₁.

Bei einer Bewegung in die entgegengesetzte Richtung, also weg vom Ventilsitz, ist der zweite Druckraum 12 mit dem Druck p₁ beaufschlagt.

Um diese Bewegung des Ventilkegels 2 zu ermöglichen, ist der Ventilkegel 2 rohrförmig zur Rotationssymmetrieachse 6 ausgebildet, wobei endseitig 15 der Ventilkegel 2 eine Stufe 16 aufweist, wobei eine obere Stufe 17 und eine untere Stufe 18 endseitig 15 angeordnet ist.

Der Ventilkörper 4 weist einen dritten Druckraum 19 auf, der derart ausgebildet ist, das bei einer Beaufschlagung im dritten Druckraum 19 mit dem Druck p₀ eine Druckkraft auf den Ventilkegel 2 in Richtung Ventilsitz 3 erfolgt.

Der Ventilkegel 2 weist im ersten Druckraum 11 in Richtung Ventilsitz 3 gesehen (also in Richtung der Rotationssymmetrieachse 6) eine projizierte effektive erste Druckfläche A1 auf.

Der Ventilkegel 2 weist im zweiten Druckraum 12 in Richtung vom Ventilsitz 3 weg eine projizierte effektive zweite Druckfläche A2 auf.

Der Ventilkegel 2 weist im dritten Druckraum 19 in Richtung Ventilsitz 3 gesehen eine projizierte effektive dritte Druckfläche A3 auf. Der Ventilkegel 2 weist im Einströmraum 7 in Richtung vom Ventilsitz 3 weg eine projizierte effektive vierte Druckfläche A4 auf. Dabei gilt: A1 < A2, A1 > A4, A1 + A3 > A2, A1 + A3 = A2 + A4. Das bedeutet, dass bei gleichen Drücken p₁ im ersten (A1) und vierten (A4) Druckraum und einem Druck p₀ im zweiten (A2) und dritten (A3) Druckraum und p₁ > p₀ die Druckkraft insgesamt auf die Fläche A1 + A3 größer ist als auf die Fläche A2 +A4, was zu einer Bewegung des Ventilkegels 2 zum Ventilsitz 3 hin führt und somit ein Schließen des Ventils 1 ermöglicht.

Weiterhin bedeutet dies, dass bei gleichen Drücken p₁ im ersten (A1), zweiten (A2) und vierten (A4) Druckraum und einem Druck p₀ im dritten (A3) Druckraum und p₁ > p₀ die Druckkraft insgesamt auf die Fläche A2 + A4 größer ist als auf die Fläche A1 + A3, was zu einer Bewegung des Ventilkegels 2 vom Ventilsitz 3 weg führt und somit ein Öffnen des Ventils 1 ermöglicht.

Dadurch lässt sich das Ventil 1 nur durch Änderung des Drucks zwischen p₁ und p₀ im Druckraum 12 bei konstanten Drücken p₀ im Druckraum 19 und p₁ im Druckraum 11 und Einströmraum 7 öffnen und schließen.

Weiterhin ist das Ventil 1 bei Druckabfall von p₁ auf p₀ im Druckraum 12 und anliegenden Druck p₁ im Einströmraum automatisch geschlossen.

Der Ventilkegel 2 ist zum Schnellschluss ausgebildet.

Somit ist die obere Stufe 17 dem dritten Druckraum 19 und die untere Stufe 18 dem ersten Druckraum 11 zugeordnet.

Der Stellventilkegel 5 weist neben der Schnellschlussfunktion auch eine Funktion zum Regeln der Dampfströmung auf.

Somit wird erfindungsgemäß durch verschiedene Geometrien der Arbeitsräume und der Verwendung zweier thermodynamische differentere Dampfzustände ermöglicht, dass das Ventil 1 bei anstehenden Prozessmedien mit den Drücken p₀ und p₁ in geschlossener Position verharrt und durch die gezielte Zufuhr des Prozessmediums p₁ in den Druckraum 12 geöffnet wird.

## Patentansprüche

1. Ventil (1) für eine Strömungsmaschine,
insbesondere für eine Dampfturbine (10), , wobei das Ventil (1) einen Ventilkegel (2) umfasst und
einem Ventilsitz (3),
wobei der Ventilkegel (2) in einem Ventilkörper (4) bewegbar gegenüber dem Ventilsitz (3) ausgebildet ist,
wobei der Ventilkörper (4) einen ersten Druckraum (11) aufweist, der derart ausgebildet ist,
dass bei einer Beaufschlagung im ersten Druckraum (11) mit dem Druck p₁ sich der Ventilkegel (2) in Richtung Ventilsitz (3) bewegt,
wobei der Ventilkörper (4) einen zweiten Druckraum (12) aufweist, der derart ausgebildet ist,
dass bei einer Beaufschlagung im zweiten Druckraum (12) mit dem Druck p₁ sich der Ventilkegel (2) in die Richtung vom Ventilsitz (3) weg bewegt,
wobei der erste Druckraum (11) in Bewegungsrichtung des Ventilkegels (2) zum Ventilsitz (3) hin gesehen, eine projizierte effektive erste Druckfläche A1 aufweist,
wobei der zweite Druckraum (12) in Bewegungsrichtung des Ventilkegels (2) vom Ventilsitz (3) weg gesehen, eine projizierte effektive zweite Druckfläche A2 aufweist,
wobei gilt: A1 < A2.

2. Ventil (1) nach Anspruch 1,
mit einem Einströmraum (7) zum Zuführen von Prozessmedium, insbesondere Dampf,
wobei im Ventilkegel (2) eine Zuleitung (13) oder im Ventilgehäuse eine Zuleitung (20) ausgebildet ist, die den Einströmraum (7) mit dem ersten Druckraum (11) strömungstechnisch verbindet.

3. Ventil (1) nach Anspruch 1 oder 2,
mit einer Einrichtung zum Zuführen von Dampf in den zweiten Druckraum (12),
wobei die Einrichtung derart ausgebildet ist,
dass bei der Bewegung des Ventilkegels (2) in Richtung Ventilsitz (3) der zweite Druckraum (12) mit dem Druck p₀ beaufschlagt ist,
wobei gilt: p₀ < p₁.

4. Ventil (1) nach einem der vorhergehenden Ansprüche,
wobei die Einrichtung derart ausgebildet ist,
dass bei der Bewegung des Ventilkegels (2) in vom Ventilsitz (3) weg der zweite Druckraum (12) mit dem Druck p₁ beaufschlagt ist.

5. Ventil (1) nach einem der vorhergehenden Ansprüche,
wobei der Ventilkörper (4) einen dritten Druckraum (19) aufweist, der derart ausgebildet ist,
dass bei einer Beaufschlagung im dritten Druckraum (19) mit dem Druck p₀ eine Druckkraft auf den Ventilkegel (2) in Richtung Ventilsitz (3) erfolgt.

6. Ventil (1) nach einem der vorhergehenden Ansprüche,
wobei der Ventilkegel (2) rohrförmig ausgebildet ist,
wobei endseitig der Ventilkegel (2) eine Stufe aufweist,
wobei eine obere Stufe dem dritten Druckraum (19) und eine untere Stufe dem ersten Druckraum (11) zugeordnet ist.

7. Ventil (1) nach einem der vorhergehenden Ansprüche,
wobei innerhalb des Ventilkegels (2) ein Stellventilkegel angeordnet ist, der zum Regeln einer Dampfströmung ausgebildet ist.

8. Ventil (1) nach einem der vorhergehenden Ansprüche,
wobei das Ventil (1) als Schnellschlussventil ausgebildet ist.

9. Ventil (1) nach einem der vorhergehenden Ansprüche,
wobei der dritte Druckraum (19) in Bewegungsrichtung des Ventilkegels (2) zum Ventilsitz (3) hin eine projizierte effektive dritte Druckfläche A3 aufweist,
wobei gilt: A1 + A3 > A2.

10. Ventil (1) nach einem der vorhergehenden Ansprüche,
wobei der Ventilkegel (2) in Bewegungsrichtung des Ventilkegels (2) vom Ventilsitz (3) weg im Einströmraum (7) eine projizierte effektive dritte Druckfläche aufweist,
wobei gilt: A1 + A3 = A2 + A4.

11. Ventil (1) nach Anspruch 10,
wobei gilt: A1 > A4.

## Claims

1. Valve (1) for a turbomachine, in particular for a steam turbine (10), the valve (1) comprising a valve cone (2) and a valve seat (3), the valve cone (2) being configured such that it can be moved in a valve body (4) with respect to the valve seat (3), the valve body (4) having a first pressure space (11) which is configured in such a way that, in the case of loading in the first pressure space (11) at the pressure p₁, the valve cone (2) moves in the direction of the valve seat (3), the valve body (4) having a second pressure space (12) which is configured in such a way that, in the case of loading in the second pressure space (12) at the pressure p₁, the valve cone (2) moves in the direction away from the valve seat (3), the first pressure space (11) having a projected effective first pressure area A1, as viewed in the movement direction of the valve cone (2) toward the valve seat (3), the second pressure space (12) having a projected effective second pressure area A2, as viewed in the movement direction of the valve cone (2) away from the valve seat (3), wherein: A1 < A2.

2. Valve (1) according to Claim 1, having an inflow space (7) for feeding in process medium, in particular steam, a feed line (13) being configured in the valve cone (2) or a feed line (20) being configured in the valve housing, which feed line connects the inflow space (7) to the first pressure space (11) in terms of flow.

3. Valve (1) according to Claim 1 or 2, having a device for feeding steam into the second pressure space (12), the device being configured in such a way that, in the case of a movement of the valve cone (2) in the direction of the valve seat (3), the second pressure space (12) is loaded at the pressure p₀, wherein: p₀ < p₁.

4. Valve (1) according to one of the preceding claims, the device being configured in such a way that, in the case of the movement of the valve cone (2) away from the valve seat (3), the second pressure space (12) is loaded at the pressure p₁.

5. Valve (1) according to one of the preceding claims, the valve body (4) having a third pressure space (19) which is configured in such a way that, in the case of loading in the third pressure space (19) at the pressure p₀, a pressure force is exerted on the valve cone (2) in the direction of the valve seat (3).

6. Valve (1) according to one of the preceding claims, the valve cone (2) being of tubular configuration, the valve cone (2) having a step on the end side, an upper step being assigned to the third pressure space (19) and a lower step being assigned to the first pressure space (11).

7. Valve (1) according to one of the preceding claims, an actuator valve cone which is configured for regulating steam flow being arranged within the valve cone (2).

8. Valve (1) according to one of the preceding claims, the valve (1) being configured as a quick-action closure valve.

9. Valve (1) according to one of the preceding claims, the third pressure space (19) having a projected effective third pressure area A3 in the movement direction of the valve cone (2) toward the valve seat (3), wherein: A1 + A3 > A2.

10. Valve (1) according to one of the preceding claims, the valve cone (2) having a projected effective third pressure area in the movement direction of the valve cone (2) away from the valve seat (3) in the inflow space (7), wherein: A1 + A3 = A2+ A4.

11. Valve (1) according to Claim 10, wherein: A1 > A4.

## Revendications

1. Vanne ( 1 ) pour une turbomachine,
notamment pour une turbine ( 10 ) à vapeur, la vanne ( 1 ) comprenant un cône ( 2 ) de vanne et
un siège ( 3 ) de vanne,
le cône ( 2 ) de vanne étant constitué mobile par rapport au siège ( 3 ) de vanne dans un corps ( 4 ) de vanne,
le corps ( 4 ) de vanne ayant une première chambre ( 11 ) de pression, constituée
de manière à ce que, si la première chambre ( 11 ) de pression est soumise à la pression p₁, le cône ( 2 ) de vanne se déplace en direction du siège ( 3 ) de vanne, dans laquelle le corps ( 4 ) de vanne a une deuxième chambre ( 12 ) de pression constituée
de manière à ce que, si la deuxième chambre ( 12 ) de pression est soumise à la pression p₁, le cône ( 2 ) de vanne s'éloigne du siège ( 3 ) de vanne,
dans laquelle la première chambre ( 11 ) de pression a, considéré dans la sens de déplacement du cône ( 2 ) de vanne vers le siège ( 3 ) de vanne, une première surface de pression efficace en projection,
dans laquelle la deuxième chambre ( 12 ) de pression a, considéré dans la sens de déplacement du cône ( 2 ) de vanne s'éloignant du siège ( 3 ) de vanne, une deuxième surface de pression efficace en projection,
dans laquelle on a : A1 < A2.

2. Vanne ( 1 ) suivant la revendication 1,
comprenant un espace ( 7 ) d'entrée pour l'apport de fluide de processus, notamment de vapeur,
dans laquelle il est constitué, dans le cône ( 2 ) de vanne, un conduit ( 13 ) d'apport, ou dans le corps de vanne, un conduit ( 20 ) d'apport, qui met l'espace ( 7 ) d'entrée en communication, du point de vue de la technique de l'écoulement, avec la première chambre ( 11 ) de pression.

3. Vanne ( 1 ) suivant la revendication 1 ou 2,
comprenant un dispositif d'apport de vapeur à la deuxième chambre ( 12 ) de pression,
dans laquelle le dispositif est constitué,
de manière à ce que, lors du déplacement du cône ( 2 ) de vanne en direction du siège ( 3 ) de vanne, la deuxième chambre ( 12 ) de pression soit soumise à la pression p₀, dans laquelle on a : p₀ < p₁.

4. Vanne ( 1 ) suivant l'une des revendications précédentes,
dans laquelle le dispositif est constitué,
de manière à ce que, lors du déplacement du cône ( 2 ) de vanne en s'éloignant du siège ( 3 ) de vanne, la deuxième chambre ( 12 ) de pression soit soumise à la pression p₁.

5. Vanne ( 1 ) suivant l'une des revendications précédentes,
dans laquelle le corps ( 4 ) de vanne a une troisième chambre ( 19 ) de pression qui est constituée,
de manière à ce que, si la troisième chambre (19) de pression est soumise à la pression p₀, il se produise une force de pression sur le cône ( 2 ) de vanne en direction du siège ( 3 ) de vanne.

6. Vanne ( 1 ) suivant l'une des revendications précédentes,
dans laquelle le cône ( 2 ) de vanne est tubulaire,
dans lequel, du côté de l'extrémité, le cône ( 2 ) de vanne a un épaulement, un épaulement supérieur étant associé à la troisième chambre ( 19 ) de pression et un épaulement inférieur à la première chambre ( 11 ) de pression.

7. Vanne ( 1 ) suivant l'une des revendications précédentes,
dans laquelle, il est monté, à l'intérieur du cône ( 2 ) de vanne, un cône de vanne de réglage constitué pour réguler un courant de vapeur.

8. Vanne ( 1 ) suivant l'une des revendications précédentes,
dans laquelle la vanne ( 1 ) est constituée sous la forme d'une vanne à fermeture rapide.

9. Vanne ( 1 ) suivant l'une des revendications précédentes,
dans laquelle la troisième chambre ( 19 ) de pression a, dans la direction de déplacement du cône ( 2 ) de vanne vers le siège ( 3 ) de vanne, une troisième surface A3 de pression efficace en projection,
dans laquelle on a : A1 + A3 > A2.

10. Vanne ( 1 ) suivant l'une des revendications précédentes,
dans laquelle le cône ( 2 ) de vanne a, dans la direction dans laquelle le cône ( 2 ) de vanne s'éloigne du siège ( 3 ) de vanne, dans l'espace ( 7 ) d'entrée, une troisième surface de pression efficace en projection,
dans laquelle on a : A1 + A3 = A2 + A4.

11. Vanne ( 1 ) suivant la revendication 10,
dans laquelle on a : A1 > A4.
